Europäisches Patentamt

European Patent Office

Office européen des brevets

(19)

(11) Veröffentlichungsnummer: **0 001 636**
**B1**

(12) **EUROPÄISCHE PATENTSCHRIFT**

(21) Anmeldenummer: **78101175.4**

(22) Anmeldetag: **18.10.78**

(51) Int. Cl.³: **G 03 B 27/73, G 03 B 9/02**

(54) Beleuchtungseinrichtung für Farbvergrösserungs- oder -kopiergeräte.

(30) Priorität: **21.10.77 IT 4862**

(43) Veröffentlichungstag der Anmeldung:
**02.05.79 Patentblatt 79/9**

(45) Bekanntmachung des Hinweises auf die Patenterteilung:
**11.02.81 Patentblatt 81/6**

(84) Benannte Vertragsstaaten:
**CH DE FR GB NL**

(56) Entgegenhaltungen:
**DE - B - 1 108 065**
**DE - B - 2 457 602**
**DE - C - 871 554**
**DE - C - 897 654**
**DE - C - 1 077 965**
**FR - A - 951 415**
**US - A - 2 256 385**

(73) Patentinhaber: **Durst AG Fabrik Fototechnischer Apparate**
**Gerbergasse 58**
**I-39100 Bozen (IT)**

(72) Erfinder: **Gandini, Mario**
**St. Josefsweg 23**
**I-39 042 Brixen (IT)**

(74) Vertreter: **Eitle, Werner, Dipl.-Ing. et al,**
**Arabellastrasse 4**
**D-8000 München 81 (DE)**

Beleuchtungseinrichtung für Farbvergrößerungs- oder -kopiergeräte

Die Erfindung bezieht sich auf eine Beleuchtungseinrichtung für Farbvergrößerungs- oder -kopiergeräte, die Farbfilter zur Farbkorrektur des Kopierlichts besitzt, die teilweise in den Kopierlichtstrahlengang einführbar sind, wobei zur Änderung der Hilligkeit des Kopierlichts eine normal zur Bewegungsrichtung der Farbfilter in den Kopierlichtstrahlengang einführbare Blende vorgesehen ist, deren im Strahlengang wirksame Größe sich mit der Einführtiefe in den Strahlengang ändert.

Aus der deutschen Patentschrift Nr. 897 654 ist eine Beleuchtungseinrichtung für eine Farbkopiermaschine bekannt, die teilweise in den Kopierlichtstrahlengang einführbare Farbfilter zur Farbkorrektur und eine in Bewegungsrichtung der Farbfilter in den Kopierlichtstrahlengang einführbare Blende zur Beeinflussung der Kopierlichtmenge hat. Die Blende hat eine keilförmige Öffnung. Der im Strahlengang wirksame Abstand der Begrenzungskanten der Blendenöffnung normal zur Bewegungsrichtung der Farbfilter ändert sich mit der Einführtiefe der Blende.

Aus der deutschen Patentschrift Nr. 871 554 ist eine Beleuchtungseinrichtung für Farbkopiergeräte bekannt, bei dem das von einer Lichtquelle ausgehende Licht durch ein Kondensorsystem gebündelt wird und eine aus einer rechteckigen Aperturblende, einer Schiebeblende und drei Filtern in je einer Grundfarbe bestehende Anordnung durchsetzt. Die Schiebeblende besteht aus einem oder zwei Schiebern, deren Bewegungsrichtung normal zur Bewegungsrichtung der Filter ist. Durch entsprechende Verstellung der Schieber wird eine kontinuierlich einstellbare Helligkeitsveränderung am Ausgang der Beleuchtungseinrichtung erreicht.

Werden die Filter und die Blende jedoch nicht in unmittelbarer Nähe der Aperturblende eines Kondensors, sondern beispielsweise im Raum zwischen der Lichtquelle und dem Kondensor angeordnet oder soll die beschriebene Einrichtung zur Helligkeitsveränderung in einem kondensorlosen Beleuchtungssystem Anwendung finden, bei dem beispielsweise Farbfilter kontinuierlich in ein von einer Lichtquelle abgestrahltes und durch einen geeigneten Reflektor geformtes Strahlenbündel eingeführt werden, so ist eine Helligkeitsänderung durch Bewegung der Blendenschieber normal zur Bewegungsrichtung der in ihrer Lage unveränderten Filter mit einer für die praktischen Erfordernisse untragbaren Änderung der farblichen Zusammensetzung des Kopierlichtes verbunden.

Der Erfindung liegt die Aufgabe zugrunde, eine Beleuchtungseinrichtung der eingangs genannten Art zu schaffen, bei der die Blende entweder in einer von der Aperturblende eines Kondensors verschiedenen Ebene oder in einem kondensorlosen Beleuchtungssystem angeordnet sein kann, ohne daß bei einer Blendenverstellung eine für die praktischen Erfordernisse wesentliche Änderung der farblichen Zusammensetzung des Kopierlichtes auftritt.

Die Aufgabe wird erfindungsgemäß dadurch gelöst, daß die Blende derart ausgebildet ist, daß sich außer der wirksamen Größe auch die im Strahlengang wirksame Form der Blende mit der Einführtiefe der Blende in den Strahlengang ändert, und zwar derart, daß im wesentlichen keine Änderung der durch die Farbfilter gegebenen farblichen Zusammensetzung des Kopierlichts bewirkt wird, wenn die Helligkeit des Kopierlichts durch Änderung der Einführtiefe der Blende in den Strahlengang geändert wird.

Dabei bleibt die farbliche Zusammensetzung des Kopierlichts trotz ungleicher Helligkeitsverteilung über den Querschnitt des Strahlengangs im wesenlichen erhalten.

Überraschenderweise ist es durch eine Formänderung der Blende möglich, die durch die über den Strahlengangquerschnitt ungleich verteilte Helligkeit bedington Farbveränderungen, die bei Verstellung von Blenden unveränderbarer Form bei unveränderter Filterlage auftraten, so zu reduzieren, daß für praktische Bedürfnisse nur mehr unbedeutende Veränderungen der Farbzusammensetzung des Kopierlichtes feststellbar sind, während die gewünschte Helligkeitsveränderung über den vorgesehenen Bereich gewährleistet ist. Die erfindungsgemäße Blendenanordnung ist sowohl für Beleuchtungseinrichtungen mit Kondensoren als auch für kondensorlose Beleuchtungssysteme geeignet.

Zweckmäßige Ausführungsformen bzw. Weiterbildungen der Erfindung ergeben sich aus den Unteransprüchen.

Im folgenden wird die Erfindung an Ausführungsbeispielen und anhand von Zeichnungen näher erläutert. In den Zeichnungen zeigen:

Fig. 1 eine stark schematisierte Schnittdarstellung einer erfindungsgemäßen Beleuchtungseinrichtung;

Fig. 2 einen Teil der Beleuchtungseinrichtung von Fig. 1 in einer Ansicht in Richtung der optischen Achse, ebenfalls in stark schematisierter Darstellung;

Fig. 3 eine Blende aus Fig. 2 in einer gegenüber dieser veränderten Stellung;

Fig. 4a-d Blenden in verschiedenen Ausführungsformen;

Fig. 5 ein weiteres Ausführungsbeispiel einer erfindungsgemäßen Beleuchtungseinrichtung in einer Ansicht in Richtung der optischen Achse, in stark schematisierter Darstellung;

Fig. 6 ein Detail eines weiteren Ausführungsbeispiels der erfindungsgemäßen Beleuchtungseinrichtung.

Eine Beleuchtungseinrichtung für ein fotografisches Vergrößerungsgerät enthält eine im Innern eines Reflektors 1 angeordnete Lichtquelle 2, in deren Nähe drei Farbfilter 3, 4, 5 maximaler Dichte in einer zur optischen Achse a normalen Ebene in Richtung der Pfeile g mittels nicht näher dargestellter Betätigungsvorrichtungen 3a, 4a, 5a in den Strahlengang der Lichtquelle einschiebbar sind. Jedes dieser Filter ist einer verschiedenen subtraktiven Grundfarbe zugeordnet, beispielsweise ist das Filter 3 ein Gelbfilter, das Filter 4 ein Purpurfilter und das Filter 5 ein Blau-Grün-Filter.

Unmittelbar nach den Farbfiltern 3, 4, 5 und ungefähr an der Stelle, an der das von der Lichtquelle und dem Reflektor ausgehende Lichtbündel die engste Einschnürung aufweist, ist eine Blende angeordnet, die beispielsweise zwei rechteckige Blendenlamellen 6a, 6b umfaßt, die durch eine nicht näher dargestellte Betätigungsvorrichtung 6c in einer zur optischen Achse a normalen Ebene in Richtung der Pfeile f normal zur Bewegungsrichtung der Filter 3, 4, 5 bewegbar sind. Diese Betätigungsvorrichtung wirkt in einer solchen Weise auf die Blendenlamellen 6a, 6b ein, daß sich diese bei einer gewünschten Helligkeitsverminderung aufeinander zu bewegen, während bei einer gewünschten Erhöhung der Lichtintensität eine Bewegung der Blendenlamellen in entgegengesetzter Richtung verursacht wird.

Auf jeder Blendenlamellen 6a, 6b ist eine Zusatzblende 7a, 7b angebracht. Die Zusatzblenden 7a, 7b sind ebenfalls in Richtung der Pfeile f, jedoch relativ zu den Blendenlamellen 6a, 6b bewegbar. Um diese Bewegung zu ermöglichen, sind die Zusatzblenden 7a, 7b in entsprechenden auf den Blendenlamellen 6a, 6b angebrachten Führungen 8a, 8b gleitbar. Die Zusatzblenden 7a, 7b sind so gestaltet, daß bei deren Relativbewegung gegenüber den jeweiligen Blendenlamellen 6a, 6b die Form der wirksamen Blende, die in diesem Falle aus den Blendenlamellen 6a, 6b und den Zusatzblenden 7a, 7b zusammengesetzt ist, abhängig von der Einführtiefe in den Strahlengang änderbar ist.

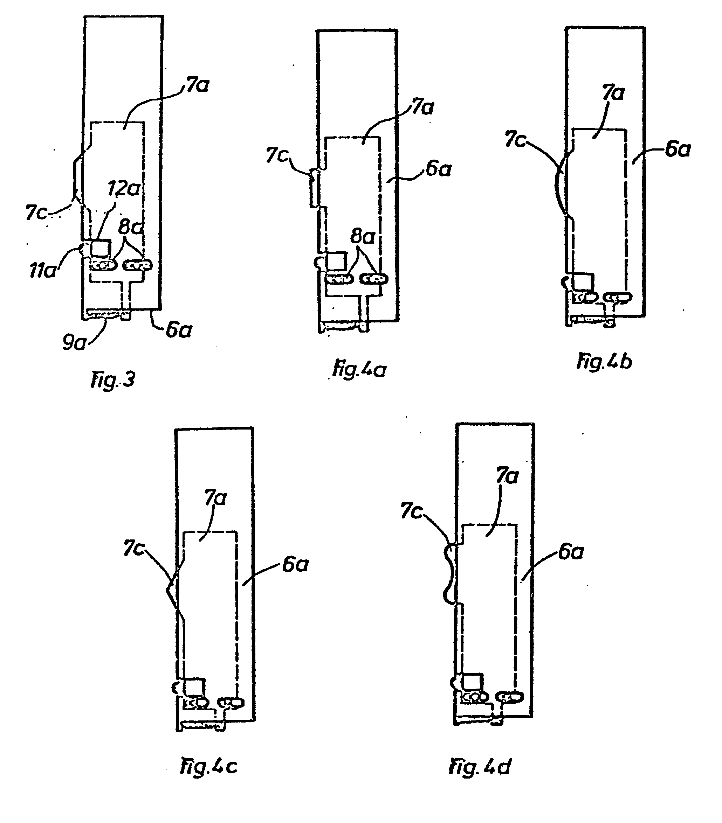

Die bei der jeweiligen Einführtiefe günstigste Form, bei der gegenüber einer vorherigen Stellung keine Änderung des Verhältnisses der drei Grundfarbenanteile auftritt, kann empirisch in einer Versuchsreihe ermittelt werden. Für eine bestimmte Kombination einer Lichtquelle 2 und eines Reflektors 1 wurden günstige Ergebnisse mit einer Zusatzblende erzielt, deren in den Strahlengang einführbarer wirksamer Teil 7c bzw. 7d trapezförmig ist. Es sind jedoch Lichtverteilungsverhältnisse denkbar, bei denen andere Formen für die Zusatzblenden günstiger sind. In den Fig. 4a-d sind einige solcher unterschiedlicher Formen dargestellt. Fig. 4a zeigt eine rechteckige, Fig. 4b eine kreissegmentförmige, Fig. 4c eine dreieckige Form des in den Strahlengang einführbaren Teils 7c bzw. 7d einer Zusatzblende 7a bzw. 7b, während dieser Teil in der Fig. 4d eine abgerundete Form mit einem mittigen Höcker bzw. einer mittigen Vertiefung aufweist.

Durch die Kraft von Federn 9a, 9b, die an den Blendenlamellen 6a, 6b einerseits und den Zusatzblenden 7a, 7b andererseits angreifen, werden die Zusatzblenden 7a, 7b in Richtung der optischen Achse a gedrückt. Auf einer eine rechteckige Lichtdurchlaßöffnung aufweisenen Platte 10 sind zwei je einer Blendenlamelle 6a, 6b zugeordnete gerätefeste Anschläge 11a, 11b angebracht, die mit den jeweiligen Zusatzblenden 7a, 7b in Wirkverbindung treten können. Ab einer gewissen Einführtiefe der Blendenlamellen 6a, 6b in Richtung der optischen Achse a erreicht die Vorderkannte der Zusatzblenden 7a, 7b den jeweiligen Anschlag 11a, 11b, der die Zusatzblenden 7a, 7b beim Weiterbewegen der Blendenlamellen 6a, 6b in der erwähnten Richtung in einer festen Lage hält. Dadurch bleiben die Zusatzblenden 7a, 7b gegenüber den entsprechenden Blendenlamellen 6a, 6b zurück, wodurch der wirksame Anteil 7c, 7d der Zusatzblenden 7a, 7d gegenüber dem wirksamen Anteil der Blendenlamellen 6a, 6b vermindert wird. Es erfolgt also eine Formänderung der im Strahlengang wirksamen Blende.

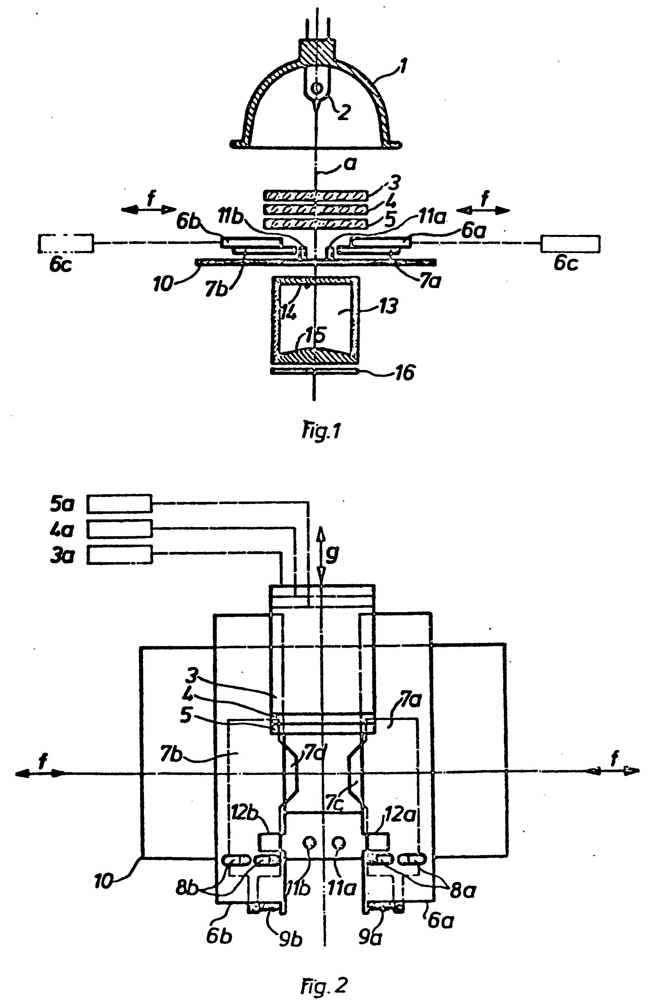

In Fig. 3 ist eine Blendenstellung dargestellt, bei der die auf die Blendenlamelle 6a bezogene Lage der Zusatzblende 7a gegenüber der in Fig. 2 dargestellten Situation verändert ist und sich somit die Form der Blende gegenüber einer Ausgangssituation geändert hat. Um eine Relativbewegung der Zusatzblenden 7a, 7b zu ermöglichen, ist in den Blendenlamellen 6a, 6b je ein Schlitz 12a, 12b zur Aufnahme der Anschläge 11a, 11b ausgespart. Ab einer gewissen Einführtiefe sind beim dargestellten Ausführungsbeispiel nur mehr die Blendenlamellen 6a, 6b allein wirksam. Bei deren Rückführung in Richtung einer Erhöhung der Lichtintensität werden umgekehrt ab einer gewissen Stelle die Zusatzblenden 7a, 7b durch die Kraft der Federn 9a, 9b wieder zunehmend über die Kanten der Blendenlamellen 6a, 6b hinausgeschoben und erlangen somit wieder zunehmende Wirksamkeit im Strahlengang. Durch diese von der Stellung der Blendenlamellen 6a, 6b abhängige Form der wirksamen Blende ist es möglich, die durch die unterschiedliche Helligkeit im Strahlenquerschnitt verursachten Farbverschiebungen zu vermeiden. Dies ist bei jeder Einführtiefe der einzelnen Farbfilter 3, 4, 5 gewährleistet.

Das nach Durchsetzung der Filter 3, 4, 5 je nach deren Einführtiefe in den Strahlengang teilweise gefärbte Strahlenbündel wird in einem Lichtmischschacht 13 mit reflektierenden Innenwänden homogenisiert. Um eine bessere Mischung des Lichtes zu gewährleisten, ist die Lichteintritts- und -austrittsseite des Lichtmischschachtes durch je eine Streuscheibe 14, 15 abgedeckt. Die Streuscheibe 15 kann eine die Lichtverteilung beeinflussende Querschnittsform aufweisen. Der Lichtmischschacht 13 kann je nach Format der zu durchleuchtenden, unterhalb von diesem angeordneten Bildvorlage 16 die verschiedensten Längen und Formen aufweisen. Die Bildvorlage wird durch ein nicht dargestelltes Objektiv auf eine nicht dargestellte Abbildungsfläche projiziert.

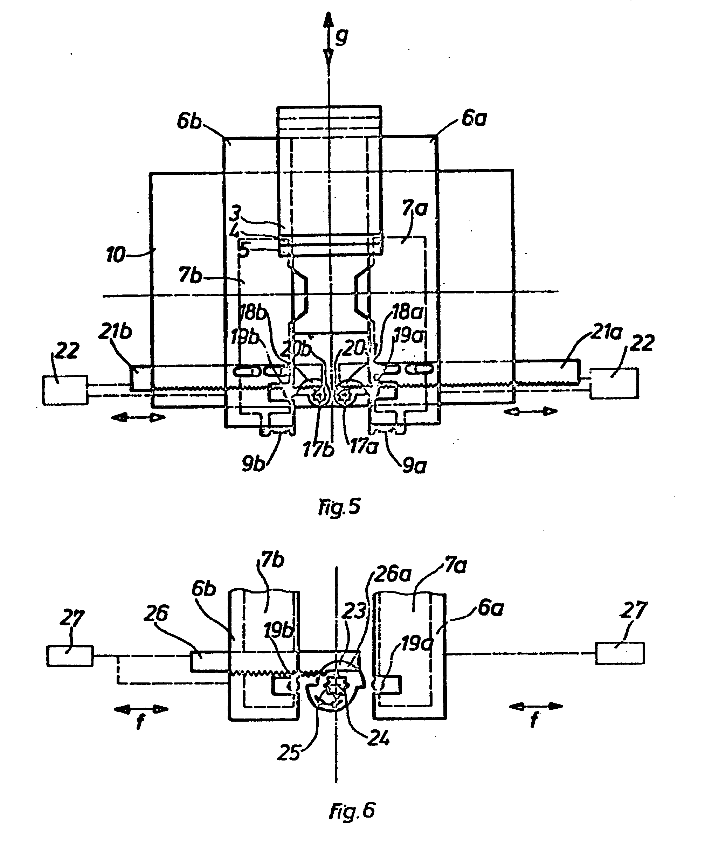

In den Fig. 5 und 6 sind weitere Ausführungsformen der Beleuchtungseinrichtung dargestellt, bei denen die Relativbewegung der Zusatzblenden 7a, 7b nach einer beliebigen, beispielsweise nichtlinearen Funktion der Einführtiefe der Blendenlamellen 6a, 6b erfolgen kann. Dazu sind auf der Platte 10 zwei um je eine gerätefeste Drehachse 17a, 17b drehbare Kurvenscheiben 18a, 18b angebracht, die mit je einem auf den jeweiligen Zusatzblenden 7a, 7b befestigten Zapfen 19a, 19b in Wirkverbindung stehen. Die Kurvenscheiben 18a, 18b sind fest mit je einem zur jeweiligen Drehachse koaxialen Zahnrad 20a, 20b verbunden, wovon jedes mit einer Zahnstange 21a, 21b kämmt. Die Zahnstangen 21a, 21b können beispielsweise mit den jeweiligen Blendenlamellen 6a, 6b fest verbunden sein, so daß deren Bewegung in eine Drehbewegung der Kurvenscheiben 18a, 18b umgesetzt wird. Da die Zapfen 19a, 19b durch die Wirkung der Federn 9a, 9b an den Kurvenscheiben 18a, 18b anliegen, wird eine deren Profil entsprechende Relativbewegung der Zusatzblenden 7a, 7b gegenüber den Blendenlamellen 6a, 6b bewirkt. Die Zahnstangen 21a, 21b können auch unabhängig von den Blendenlamellen 6a, 6b in Abhängigkeit einer nicht näher dargestellten Betätigungsvorrichtung 22 bewegbar sein, über die auch die Blendenlamellen 6a, 6b betätigt werden.

Die Steuerung der Bewegung der Zusatzblenden 7a, 7b kann auch über eine einzige Kurvenscheibe 23 erfolgen (Fig. 6), die um eine ebenfalls auf der Platte 10 befestigte Drehachse 24 drehbar ist. Das Profil der Kurvenscheibe 23 ist je zur Hälfte einer der beiden Zusatzblenden 7a, 7b zugeordnet, wobei deren gesamter Verstellweg über eine halbe Umdrehung der Kurvenscheibe, die über die Zapfen 19a, 19b mit den Zusatzblenden 7a, 7b in Wirkverbindung steht, gesteuert wird. Mit der Kurvenscheibe 23 ist ein zur Drehachse 24 koaxiales Zahnrad 25 verbunden, das mit einer Zahnstange 26 in Wirkverbindung treten kann. Wie aus Fig. 6 ersichtlich ist, kommen die Zapfen 19a, 19b erst ab einer gewissen Einführtiefe der Blendenlamellen 6a, 6b mit der Kurvenscheibe 23 in Berührung, so daß die Form der wirksamen Blende innerhalb eines gewissen Verstellweges unverwändert bleibt. Diesem Verstellweg entspricht auch ein glatter Teil 26a der Zahnstange 26, der keine Verzahnung aufweist und somit auch nicht auf das Zahnrad 25 einwirkt. Erst ab einer gewissen Stellung der Blendenschieber kämmt das Zahnrad mit dem Verzahnten Teil der Zahnstange 26. Diese kann wiederum entweder mit einer der Blendenlamellen 6a, 6b fest verbunden oder über eine Betätigungsvorrichtung 27, die auch zur Betätigung der Blendenlamellen 6a, 6b dient, getrennt bewegbar sien.

Die Bewegungsart der Zahnstangen 21a, 21b, 26 und die Profile der Kurvenscheiben 18a, 18b, 23 hängen von der gewünschten Funktion der Relativbewegung zwischen Blendenlamellen 6a, 6b und Zusatzblenden 7a, 7b ab und werden beispielsweise empirisch in einer Versuchsreihe ermittelt.

Bei der erfindungsgemäßen Beleuchtungseinrichtung für Farbvergrößerungs- oder -kopiergeräte sind drei Farbfilter 3, 4, 5 maximaler Dichte und normal zu deren Bewegungsrichtung eine Blende in den Kopierstrahlengang kontinuierlich einführbar. Um bei einer Verstellung der Blende eine Änderung der Farbzusammensetzung des Kopierlichts zu vermeiden, ist die im Stahlengang wirksame Form der Blende abhängig von deren Einführtiefe veränderbar. Zu diesem Zweck besteht die Blende beispielsweise aus einer Blendenlamelle 6a, 6b und einer Zusatzblende 7a, 7b, deren Stellung relativ zur zugehörigen Blendenlamelle 6a, 6b je nach deren Einführtiefe unterschiedlich ist.

**Patentansprüche**

1. Beleuchtungseinrichtung für Farbvergrößerungs- oder -kopiergeräte, die Farbfilter zur Farbkorrektur des Kopierlichts besitzt, die teilweise in den Kopierlichtstrahlengang einführbar sind, wobei zur Änderung der Helligkeit des Kopierlichts eine normal zur Bewegungsrichtung der Farbfilter in den Kopierlichtstrahlengang einführbare Blende vorgeschen ist, deren im Strahlengang wirksame Größe sich mit der Einführtiefe in den Strahlengang ändert, dadurch gekennzeichnet, daß die Blende (6a, 6b, 7a, 7b) derart ausgebildet ist, daß sich außer der wirksamen Größe auch die im Strahlengang wirksame Form der Blende mit der Einführtiefe der Blende in den Strahlengang ändert, und zwar derart, daß im wesentlichen keine Änderung der durch die Farbfilter (3, 4, 5) gegebenen farblichen Zusammensetzung des Kopierlichts bewirkt wird, wenn die Helligkeit des Kopierlichts durch Änderung der Einführtiefe der Blende in den Strahlengang geändert wird.

2. Beleuchtungseinrichtung nach Patentanspruch 1, dadurch gekennzeichnet, daß die Blende mindestens eine im Strahlengang verstellbare Blendenlamelle (6a, 6b) umfaßt, in deren unmittelbarer Nähe eine relativ zur Blendenlamelle (6a, 6b) bewegbare Zusatzblende (7a, 7b) zur Änderung der wirksamen Form der Blende angeordnet ist.

3. Beleuchtungseinrichtung nach Patentanspruch 2, dadurch gekennzeichnet, daß der im Strahlengang wirksame Teil (7c, 7d) der Zusatzblende (7a, 7b) ein rechteckiges, trapezförmiges kreissegmentförmiges, dreieckförmiges oder abgerundetes Profil aufweist.

4. Beleuchtungseinrichtung nach Patentanspruch 3, dadurch gekennzeichnet, daß das abgerundete Profil einen mittigen Höcker oder eine mittige Vertiefung aufweist.

5. Beleuchtungseinrichtung nach einem der Patentansprüche 2 bis 4, dadurch gekennzeichnet, daß die Zusatzblende (7a, 7b) an der jeweiligen Blendenlamelle (6a, 6b) befestigt und innerhalb darauf vorgesehener Führungen (8a, 8b) bewegbar ist.

6. Beleuchtungseinrichtung nach einem der Patentansprüche 2 bis 5, dadurch gekennzeichnet, daß ein zwischen der jeweiligen Blendenlamelle (6a, 6b) und der jeweiligen Zusatzblende (7a, 7b) angebrachtes Federelement (9a, 9b) eine Kraft auf die Zusatzblenden in Richtung zu der optischen Achse (a) ausübt.

7. Beleuchtungseinrichtung nach einem der Patentansprüche 2 bis 6, dadurch gekennzeichnet, daß eine Wirkverbindung zwischen der jeweiligen Zusatzblende (7a, 7b) und einem entsprechenden gerätefesten Anschlag (11a, 11b) herstellbar ist.

8. Beleuchtungseinrichtung nach einem der Patentansprüche 2 bis 6, dadurch gekennzeichnet, daß eine Wirkverbindung zwischen der jeweiligen Zusatzblende (7a, 7b) und einer entsprechenden, um eine gerätefeste Achse (17a, 17b, 24) drehbaren Kurvenscheibe (18a, 18b, 23) herstellbar ist.

9. Beleuchtungseinrichtung nach Patentanspruch 8, dadurch gekennzeichnet, daß der Drehwinkel der jeweiligen Kurvenscheibe von der Einführtiefe der zugeordneten Blendenlamelle (6a, 6b) abhängig ist.

10. Beleuchtungseinrichtung nach Patentansprüch 9, dadurch gekennzeichnet, daß eine Zahnstange (21a, 21b, 26) mit einem mit einer Kurvenscheibe (18a, 18b, 23) verbundenen Zahnrad (20a, 29b, 25) in Wirkverbindung bringbar ist.

11. Beleuchtungseinrichtung nach Patentanspruch 10, dadurch gekennzeichnet, daß die jeweilige Zahnstange (21a, 21b, 26) mit einer entsprechenden Blendenlamelle (6a, 6b) verbunden ist.

12. Beleuchtungseinrichtung nach einem der Patentansprüche 8 bis 11, dadurch gekennzeichnet, daß für einen Teil des Verstellwegs der jeweiligen Blendenlamelle (6a, 6b) keine Wirkverbindung zwischen der entsprechenden Kurvenscheibe (18a, 18b, 23) und der entsprechenden Zusatzblende (7a, 7b) besteht.

**Claims**

1. Exposure device for color-enlargement or copying machines which have color-filters for the color correction of the copying light, which can partially be introduced into the path of the copying light beam, whereby to alter the luminosity of the copying light a diaphragm is provided which can be introduced normally to the direction of motion of said color filter into the path of the copying light beam, and of which the effective size in the beam's path alters with its depth of penetration into the beam's path, characterized in that said diaphragm (6a, 6b, 7a, 7b) is so designed that apart from said effective size, the effective form in the beam's path also changes with the depth of penetration into the beam's path of said diaphragm, and in such a manner that in essence on alteration of the existing color combination of the copying light is effected by the color filters (3, 4, 5), when the luminosity of the copying light is changed by the alteration of the penetration depth of said diaphragm into the beam's path.

2. Exposure device according to patent claim 1, characterized in that said diaphragm comprises at least one diaphragm leaf which is adjustable in the beam path ((a, 6b), in the immediate proximity of which an additional diaphragm (7a, 7b) which is movable in relation to the diaphragm leaf (6a, 6b) is arranged to alter said effective form of said diaphragm.

3. Exposure device according to patent claim 2, characterized in that the effective part (7c, 7d) of said additional diaphragm in the beam path has a right-angled, trapezoid, near-circular, triangular or rounded profile.

4. Exposure device according to patent claim 3, characterized in that the rounded profile has a central hump or a central recess.

5. Exposure device according to one of the claims 2 to 4 above, characterized in that the additional diaphragm (7a, 7b) is secured to the respective diaphragm leaf (6a, 6b) and is movable within guides (8a, 8b) mounted thereon.

6. Exposure device according to one of the patent claims 2 to 5, characterized in that a spring element (9a, 9b) mounted between the relevant diaphragm leaf (6a, 6b) and the respective additional diaphragm (7a, 7b) exerts a force on the additional diaphragms in the direction of the optical axis (a).

7. Exposure device according to one of patent claims 2 to 6, characterized in that an effective combination is produceable between the respective additional diaphragm (7a, 7b) and a corresponding stop affixed to the instrument (11a, 11b).

8. Exposure device according to one of patent claims 2 to 6, characterized in that an effective connection is produceable between the respective additional diaphragm (7a, 7b) and a corresponding cam plate (18a, 18b, 23) which is rotatable around an axis fixed by said instrument (17a, 17b, 24).

9. Exposure device according to patent claim 8, characterized in that the angle of rotation of the respective cam plate is dependent on the depth of penetration of the assigned diaphragm leaf (6a, 6b).

10. Exposure device according to patent claim 9, characterized in that a cog rack (21a, 21b, 26) can be brought into effective connection with a cogwheel (20a, 20b 25) which is connected with said cam plate (18a, 18b, 23).

11. Exposure device according to patent claim 10, characterized in that the respective

cog rack (21a, 21b, 26) is connected to a corresponding diaphragm leaf (6a, 6b).

12. Exposure device according to one of patent claims 8 to 11, characterized in that for a part of the adjustable path of the respective diaphragm leaf (6a, 6b) there is no effective connection between the corresponding cam plate (18a, 18b, 23) and the corresponding additional diaphragm (7a, 7b).

**Revendications**

1. Dispositif d'éclairage pour des appareils d'agrandissement ou de reproduction d'images en couleur, ce dispositif comportant dees filtres colorés pour la correction des couleurs de la lumière de reproduction, filtres qui peuvent être disposés partiellement dans la trajectoire de la lumière de reproduction, un diaphragme qui peut être introduit dans le faisceau lumineux de façon habituelle par rapport au sens de déplacement des filtres colorés, étant prévu pour faire varier l'intensité lumineuse de la lumière de reproduction et dont l'ouverture effective varie en fonction de sa profondeur d'introduction dans le faisceau lumineux, caractérisé en ce que le diaphragme 6a, 6b, 7a, 7b est réalisé de façon que non seulement le grandeur effective mais également la forme effective du diaphragme varient à l'intérieur de faisceau lumineux en fonction de la profondeur d'introduction du diaphragme dans le faisceau et ceci de manière que les filtres colorés 3, 4, 5 ne créent pas de modification notable de la composition des couleurs de la lumière de reproduction lorsque la luminosité de cette dernière est modifiée par suite d'une introduction plus ou moins profonde du diaphragme dans le faisceau lumineux.

2. Dispositif suivant la revendication 1, caractérisé en ce que le diaphragme comporte au moins une lame de diaphragme (6a, 6b) pouvant être déplacée à l'intérieur du faisceau lumineux et en ce qu'un diaphragme additionnel (7a, 7b) pouvant être déplacé par rapport à la lame de diaphragme (6a, 6b), est prévu à proximité immédiate de cette dernière afin de pouvoir modifier la forme effective du diaphragme.

3. Dispositif suivant la revendication 2, caractérisé en ce que la partie (7c, 7d) du diaphragme additionnel (7a, 7b) et aggissant sur le faisceau lumineux présente un profil rectangulaire, trapézoïdal, triangulaire, arrondi ou en forme de segment de cercle.

4. Dispositif suivant la revendication 3, caractérisé en ce que le profil de forme arrondie présente une partie en retrait dans sa zone médiane.

5. Dispositif suivant l'une des revendications 2 à 4, caractérisé en ce que le diaphragme additionnel (7a, 7b) est monté sur les lames de diaphragme (6a, 6b) de façon à pouvoir être déplacé dans des guides (8a, 8b) prévus sur ces dernières.

6. Dispositif suivant l'une des revendications 2 à 5, caractérisé en ce qu'un élément élastique (9a, 9b) monté entre chacune des lames de diaphragme (6a, 6b) et le diaphragme additionnel associé (7a, 7b) exerce sur les diaphragmes additionnels une force agissant en direction de l'axe optique a.

7. Dispositif suivant l'une des revendications 2 à 6, caractérisé en ce qu'une interaction peut être réalisée entre chacun des diaphragmes additionnels (7a, 7b) et une butée correspondante (11a, 11b) solidaire de l'appareil.

8. Dispositif suivant l'une des revendications 2 à 6, caractérisé en ce qu'une interaction peut être réalisée entre chacun des diaphragmes additionnels (7a, 7b) et un disque à came correspondant (18a, 18b, 23) monté pour tourner sur un axe (17a, 17b, 24) solidaire de l'appareil.

9. Dispositif suivant la revendication 8, caractérisé en ce que l'angle de rotation de chaque disque à came est fonction de la profondeur d'introduction de la lame de diaphragme associée (6a, 6b).

10. Dispositif suivant la revendication 9, caractérisé en ce qu'une crémaillère (21a, 21b, 26) peut engréner avec une roue dentée (20a, 20b, 25) que est reliée à l'un des disques à came (18a, 18b, 23).

11. Dispositif suivant la revendication 10, caractérisé en ce que chacune des crémaillères (21a, 21b, 26) est reliée à la lame de diaphragme correspondante (6a, 6b).

12. Dispositif suivant l'une des revendications 8 à 11, caractérisé en ce qu'il n'y a pas d'interaction entre les disques à came (18a, 18b, 23) et les diaphragmes additionels correspondants (7a, 7b) pendant une partie de la course de réglage des lames de diaphragme (6a, 6b).

**Fig.1**

**Fig. 2**

Fig. 3

Fig. 4a

Fig. 4b

Fig. 4c

Fig. 4d

Fig. 5

Fig. 6